# EUROPÄISCHE PATENTSCHRIFT

(11) **EP 0 436 536 B1**
(45) Veröffentlichungstag und Bekanntmachung des Hinweises auf die Patenterteilung: **04.05.1994**
(21) Anmeldenummer: 89902026.7
(22) Anmeldetag: 10.02.1989
(51) Int. Cl.: F01K 23/10

(54) **VERFAHREN UND ANLAGE ZUR ABHITZEDAMPFERZEUGUNG**
PROCESS AND PLANT FOR GENERATING STEAM USING WASTE HEAT
PROCEDE ET INSTALLATION DE GENERATION DE VAPEUR AU MOYEN DE CHALEUR PERDUE

(30) Priorität: 12.02.1988 DE 3804605
(43) Veröffentlichungstag der Anmeldung: 17.07.1991
(73) Patentinhaber: SIEMENS AKTIENGESELLSCHAFT, 80333 München (DE)
(72) Erfinder: BRÜCKNER, Hermann, D-8521 Uttenreuth (DE); STADIE, Lothar, D-8552 Höchstadt (DE); PULEC, Josef, D-8522 Herzogenaurach (DE)
(86) Internationale Anmeldenummer: DE8900081
(87) Internationale Veröffentlichungsnummer: WO8907700

(56) Entgegenhaltungen:
- EP-A- 0 129 167
- CH-A- 621 186
- DE-A- 1 426 445
- US-A- 3 204 407
- Patent Abstracts of Japan, vol. 8, no. 5, (M-267)(1442), 11 January 1984

## Beschreibung

Die Erfindung bezieht sich auf ein Verfahren zum Betrieb einer Dampfturbine, die mindestens ein Mitteldruckteil und ein Hochdruckteil aufweist, mit Hilfe eines von heißem Gas durchströmten Abhitzedampferzeugers und auf eine Anlage zur Durchführung dieses Verfahrens, mit einer solchen Dampfturbine und einem Abhitzedampferzeuger, mit einem an dem Hochdruckteil der Dampfturbine angeschlossenen Hochdruck-Heizflächen-System und mit an die Abdampfleitung des Hochdruckteils der Dampfturbine angeschlossenen Zwischenüberhitzerheizflächen, welche ausgangsseitig an den Mitteldruckteil der Dampfturbine angeschlossen sind.

Solche Verfahren zur Abhitzedampferzeugung kommen, wie die europäische Patentanmeldung 0 129 167 zeigt, vorwiegend hinter Gasturbinen zum Einsatz, um die in den Gasturbinenabgasen steckenden erheblichen Wärmemengen nutzbringend zur Dampferzeugung heranzuziehen. Bei kombinierten Gas- und Dampfturbinenkraftwerken, auch Kombikraftwerke genannt, werden mit dem so erzeugten Dampf Dampfturbinen zur zusätzlichen Erzeugung von elektrischer Energie angetrieben. Abhitzedampferzeuger sind aber auch hinter Kohlevergasern zur Abkühlung des dort erzeugten Rohgases im Einsatz. Auch wird der im Abhitzedampferzeuger erzeugte Dampf mitunter als Prozeßdampf oder einfach als Heizdampf eingesetzt. In all diesen Anwendungsbereichen, insbesondere jedoch bei kombinierten Gas- und Dampfturbinenkraftwerken, achtet man wegen der großen umzusetzenden Energiemengen darauf, die Einzel- und Gesamtwirkungsgrade möglichst groß zu machen.

Aufgabe der Erfindung ist es, den Wirkungsgrad bei der Abhitzedampferzeugung zu verbessern. Insbesondere bei kombinierten Gas- und Dampfturbinenkraftwerken soll eine Maximierung des Gesamtwirkungsgrades erzielt werden.

Diese Aufgabe wird bei einem Verfahren zum Betrieb einer Dampfturbine, die mindestens einen Mitteldruckteil und einen Hochdruckteil aufweist, mit Hilfe eines vom heißen Gas durchströmten Abhitzedampferzeugers erfindungsgemäß dadurch gelöst, daß in einem Hochdruck-Heizflächensystem erzeugter überhitzter Dampf dem Hochdruckteil der Dampfturbine zugeführt wird, dem Abdampf des Hochdruckteils der Dampfturbine eine kleinere einstellbare Menge Dampf beigemischt wird, die im Abhitzedampferzeuger in Mitteldruck-Verdampferheizflächen erzeugt wird, die Mischung aus dieser kleineren Menge Dampf und dem Abdampf in Zwischenüberhitzerheizflächen des Abhitzedampferzeugers überhitzt wird, die so überhitzte Dampfmischung dem Mitteldruckteil der Dampfturbine zugeführt und durch Verstellen der kleineren Menge Dampf die Temperatur des Dampfes so am Ausgang der Zwischenüberhitzerheizflächen an die Temperatur des Dampfes am Ausgang der Hochdruck-Überhitzerheizflächen angenähert wird. Hierdurch wird eine besonders gute Anpassung der Speisewasser- bzw. Dampftemperatur an die Rauchgastemperatur im Abhitzedampferzeuger und damit ein größtmöglicher Wirkungsgrad bei der Dampferzeugung sowie ein größerer Wirkungsgrad der Mitteldruck- Dampfturbine erreicht.

Bei einer Anlage zur Durchführung des Verfahrens nach Anspruch 1 mit einer Dampfturbine mit mindestens einem Mitteldruckteil und einem Hochdruckteil, mit einem vom heißen Gas durchströmten Abhitzedampferzeuger, mit einem an den Hochdruckteil der Dampfturbine angeschlossenen Hochdruck-Heizflächensystem und mit an die Abdampfleitung des Hochdruckteils der Dampfturbine angeschlossenen Zwischenüberhitzerheizflächen, welche ausgangsseitig an den Mitteldruckteil der Dampfturbine angeschlossen sind, ist erfindungsgemäß vorgesehen, daß die Speisewasserleitung des Abhitzedampferzeugers zu einer Verzweigungsstelle führt, von der ein erster Strang in das Hochdruck-Heizflächensystem und ein zweiter Strang in Mitteldruck-Verdampferheizflächen führt, wobei der Ausgang der Mitteldruck-Verdampferheizflächen in den Eingang der Zwischenüberhitzerheizflächen mündet, und wobei mindestens einem der beiden Stränge zur Annäherung der Temperatur des Dampfes am Ausgang der Zwischenüberhitzerheizflächen an die Temperatur des Dampfes am Ausgang der Hochdrucküberhitzerheizflächen von einer Regelstufe verstellbare Mittel zur Veränderung des Aufteilungsverhältnisses zugeordnet sind, wobei die Regelstufe über Meßfühler die Temperatur des Dampfes am Ausgang der Hochdrucküberhitzerheizflächen und am Ausgang der Zwischenüberhitzerheizflächen erfaßt. Durch diese Maßnahmen wird eine größtmögliche Flexibilität bei der Durchführung des Verfahrens und Anpaßbarkeit an das Profil der Rauchgastemperatur im Abhitzedampferzeuger erreicht.

Weitere vorteilhafte Ausgestaltungen sind den Ansprüchen 2 bis 4 sowie 6 bis 16 zu entnehmen.

In zweckmäßiger Weiterbildung der Erfindung kann das dem Zwischenüberhitzer-Verdampferheizflächen zugeführte vorgewärmte Speisewasser von dem dem Hochdruckheizflächensystem zuströmenden vorgewärmte Speisewasser abgezweigt werden. Hierdurch wird erreicht, daß durch vermehrte oder verringerte Abzweigung von vorgewärmtem Speisewasser aus dem dem Hochdruck-Heizflächensystem zugeordneten ersten Strang, der Speisewasserleitung in dem zweiten den Zwischenüberhitzer-Verdampferheizflächen zugeordneten Strang der Speisewasserleitung vermehrt oder verringert Mitteldruckdampf erzeugt wird. Dadurch sinkt die Temperatur des der Dampfturbine zuströmenden Mitteldruckdampfes bei gleichzeitiger Zunahme des Dampfvolumens bzw. steigt die Temperatur des Mitteldruckdampfes bei gleichzeitiger Abnahme des Dampfvolumens. Diese Maßnahme erlaubt eine sehr effektive Regelung der Dampfeintrittstemperatur am Mitteldruckteil der Dampfturbine und ermöglicht es zugleich, auch die Temperatur in den Heizflächen des Abhitzedampferzeugers besser an das Rauchgasprofil anzupassen.

Eine solche Betriebsweise läßt sich in besonders vorteilhafter Ausgestaltung der Erfindung mit einem Abhitzedampferzeuger erreichen, mit einem Hochdruck-Heizflächensystem zur Erzeugung eines überhitzten Dampfes, der den Hochdruckteil der Dampfturbine zuführbar ist, mit Zwischenüberhitzer-Verdampferheizflächen, denen vorgewärmte Speisewasser zur Verdampfung und gegebenenfalls Überhitzung zuführbar ist und die mit ihrem Ausgang an die Abdampfleitung des Hochdruckteils der Dampfturbine anschließbar sind, mit Zwischenüberhitzerheizflächen, die mit ihrem Eingang an den Ausgang der Zwischenüberhitzer-Verdampferheizflächen und an der Abdampfleitung des Hochdruckteils der Dampfturbine anschließbar sind, die zur Überhitzung des Gemisches aus dem Abdampf der Dampfturbine und dem Dampf aus den Zwischenüberhitzer-Verdampferheizflächen vorgesehen sind und deren Ausgang über eine Leitung an den Mitteldruckteil der Dampfturbine anschließbar ist.

Als besonders zweckmäßig hat es sich herausgestellt, die Hochdrucküberhitzer-Heizflächen und die Zwischenüberhitzerheizflächen im Abhitzedampferzeuger im Bereich der gleichen größten Gastemperatur anzuordnen. Diese Maßnahme erleichtert es besonders, sowohl den Zwischenüberhitzerdampf als auch den Hochdruckdampf auf die gleiche Temperatur aufzuheizen.

Der Druckunterschied zwischen dem Hochdruck-Heizflächen-System einerseits und den Zwischenüberhitzer-Verdampferheizflächen andererseits kann in Ausgestaltung der Erfindung in einfacher Weise durch ein in den zu den Mitteldruck-Verdampferheizflächen führenden zweiten Strang eingebautes Drosselventil erreicht werden.

Der Druckunterschied zwischen dem Hochdruck-Heizflächen-System einerseits und den Zwischenüberhitzer-Verdampferheizflächen andererseits kann in Ausgestaltung der Erfindung auch durch eine im ersten Strang eingebaute weitere drehzahlgesteuerte Förderpumpe erreicht werden. Durch diese Maßnahme braucht die Speisewasserpumpe am Eingang der Vorwärmer-Heizflächen nur den Druck der Zwischenüberhitzer-Verdampferheizflächen aufzubauen, während der Druckunterschied zwischen den Zwischenüberhitzer-Verdampfer-Heizflächen einerseits und dem Hochdruck-Heizflächensystem andererseits durch die weitere drehzahlgesteuerte Förderpumpe ausgeglichen wird.

In vorteilhafter Weiterbildung der Erfindung kann zur veränderlichen Aufteilung des Speisewassers auf die beiden Stränge ein Regelventil im zweiten Strang eingebaut sein. Damit wird es möglich, über am Ausgang der Zwischen- und der Hochdrucküberhitzer-Heizflächen eingebaute Temperaturmeßfühler die Aufteilung des Speisewassers so zu regeln, daß sich die Dampftemperaturen am Ausgang dieser beiden Überhitzerheizflächen einander nähern.

Weitere Einzelheiten der Erfindung werden anhand zweier in den Figuren dargestellter Ausführungsbeispiele erläutert. Es zeigen:
- FIG 1: eine schematische Darstellung einer erfindungsgemäßen Anlage zur Abhitzedampferzeugung,
- FIG 2: eine gegenüber dem Ausführungsbeispiel der Figur 1 abweichende Ausführungsform einer Verzweigungsstelle im Speisewasserstrang und
- FIG 3: die Anordnung der einzelnen Heizflächen des Abhitzedampferzeugers im Q/T Diagramm.

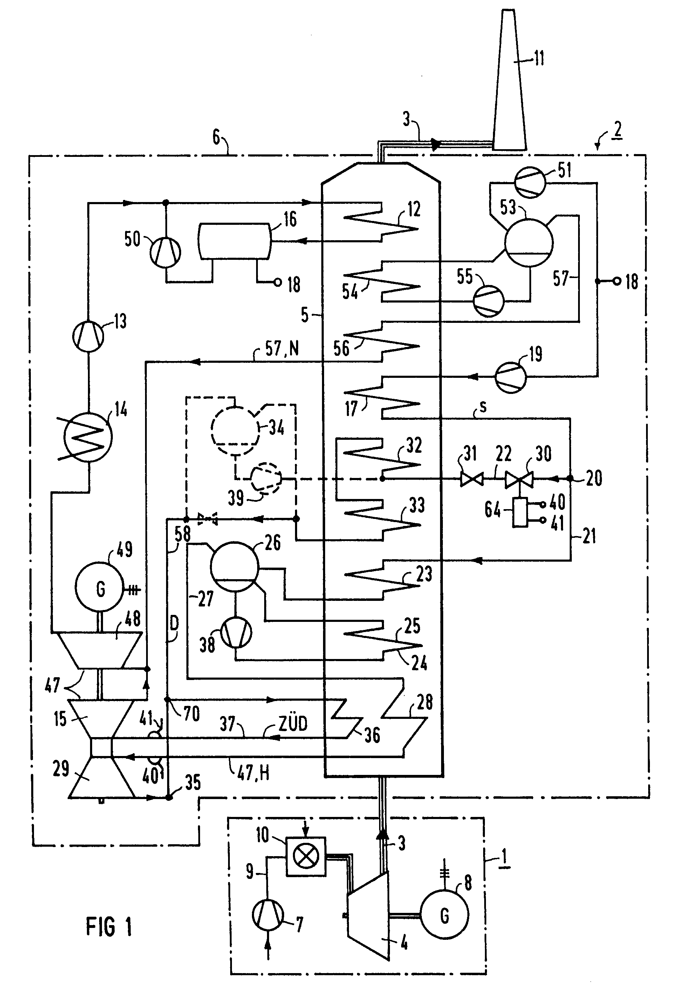

Die Figur 1 zeigt in schematischer Darstellung ein Gas- und Dampfturbinenkraftwerk 2 mit einem Gasturbinenkraftwerksteil 1 und einem Dampfkraftwerksteil 6. An der Abgasleitung 3 der Gasturbine 4 ist ein Abhitzedampferzeuger 5 angeschlossen. An den Heizflächen des Abhitzedampferzeugers 5 ist wiederum, wie später näher erläutert wird, die Dampfturbine 47 des Dampfkraftwerkes 6 angeschlossen. Diese Dampfturbine umfaßt im Ausführungsbeispiel ein Hochdruckteil 29, ein Mitteldruckteil 15 und ein Niederdruckteil 48 und treibt einen Generator 49 an.

An der Gasturbine 4 sind ein Luftverdichter 7 und ein Generator 8 angekuppelt. An der Frischluftleitung 9 zwischen dem Luftverdichter 7 und der Gasturbine 4 ist eine Brennkammer 10 vorgesehen, die mit Brennstoff, wie z. B. Erdgas oder Erdöl, betrieben wird.

Die Abgasleitung 3 Gasturbine führt über den Abhitzedampferzeuger 5 zu einem Kamin 11. Auf der Gasaustrittsseite, d. h. auf der kalten Seite des Abhitzedampferzeugers 5, sind Kondensatvorwärmheizflächen 12 zu erkennen. Diese sind eingangsseitig über eine Kondensatpumpe 13 an einen Kondensator 14 angeschlossen. Sie führen ausgangsseitig in einen Speisewasserbehälter 16. An diesen Speisewasserbehälter 16 ist eine Speisewasserumwälzpumpe 50 angeschlossen, die wiederum an den Eingang der Kondensatvorwärmerheizflächen 12 angeschlossen ist. An den Speisewasserbehälter 16 ist außerdem eine Niederdruck-Speisewasserpumpe 51 angeschlossen, die ausgangsseitig an ein Niederdruck-Wasser-Dampf-Trenngefäß 53 angeschlossen ist. Den Kondensatorvorwärmheizflächen 12 benachbart sind die über eine Umwälzpumpe 55 eingangs- und ausgangsseitig an das Niederdruck-Wasser-Dampf-Trenngefäß 53 angeschlossenen Niederdruck-Verdampferheizflächen 54. Dampfseitig ist das Niederdruck-Wasser-Dampf-Trenngefäß 53 über Niederdruck-Überhitzerheizflächen 56 an den Niederdruckteil 48 der Dampfturbine 47 angeschlossen. Zur wärmeren Seite des Abhitzedampferzeugers 5 hin sind im Abhitzedampferzeuger neben den Niederdruck-Überhitzerheizflächen 56 erste Hochdruck-Economizerheizflächen 17 eingebaut. Diese sind eingangsseitig über eine Spei-sewasserpumpe 19 an die Speisewasserleitung 18 angeschlossen. Ausgangsseitig sind diese ersten Hochdruck-Economizerheizflächen 17 an eine Verzweigungsstelle 20 angeschlossen, von der ein erster und ein zweiter Strang 21 und 22 abzweigen.

Der erste Strang 21, auch Hochdruckstrang genannt, führt im Ausführungsbeispiel der Figur 1 unmittelbar in zweite Hochdruck-Economizerheizflächen 23 und in ein an diese anschließendes Hochdruck-Wasser-Dampf-Trenngefäß 26. An dieses Hochdruck-Wasser-Dampf-Trenngefäß 26 sind über eine Umwälzpumpe zwei in Serie geschaltete Hochdruck-Verdampferheizflächen 24, 25 angeschlossen. An dem Hochdruck-Wasser-Dampf-Trenngefäß 26 ist dampfseitig eine Hochdruck-Dampfleitung 27 angeschlossen, die über Hochdruck-Überhitzerheizflächen 28 zu der zum Hochdruckteil 29 der Dampfturbine 47 führende Dampfleitung 47 führt.

Der von der Verzweigungsstelle 20 abgehende zweite Strang 22, auch Mitteldruckstrang genannt, führt über ein Regelventil 30 und eine Drosselstelle 31 zu zwei in Serie geschalteten, im Abhitzedampferzeuger 5 zwischen den ersten Hochdruck-Economizerheizflächen 17 und den zweiten Hochdruck-Economizerheizflächen 23 gelegene Mitteldruck-Verdampferheizflächen 32, 33. Diese sind ausgangsseitig über eine Dampfleitung 58 an Zwischenüberhitzerheizflächen 36 angeschlossen, die zusammen mit den Hochdruck-Überhitzerheizflächen 28 am heißen Ende, das heißt an der Seite des Abhitzedampferzeugers 5 eingebaut sind, an der die heißen Abgase der Gasturbine 4 einströmen. Die Zwischenüberhitzerheizflächen 36 sind ausgangsseitig an den Mitteldruckteil 15 der Dampfturbine 47 angeschlossen. Die Dampfleitung 58 mündet noch vor den Zwischenüberhitzerheizflächen an einer Verbindungsstelle 70 in die vom Hochdruckteil 29 der Dampfturbine 47 zu den Zwischenüberhitzerheizflächen 36 führende Abdampfleitung 35.

Sowohl die Hochdruck-Überhitzerheizflächen 28 als auch die Zwischenüberhitzerheizflächen 36 sind an der Abgaseintrittsseite des Abhitzedampferzeugers 5, und zwar im gleichen Temperaturbereich desselben eingebaut. Dies ist durch die Zeichnung der Symbole für die Heizflächen angedeutet. In der von den Zwischenüberhitzer-Verdampferheizflächen 32, 33 zu den Zwischenüberhitzerheizflächen führenden Dampfleitung 58 kann, wie das gestrichelt angedeutet wurde, auch ein Mitteldruck-Wasser-Dampf-Trenngefäß 34 mit Umwälzpumpe 39 eingebaut werden, um noch nicht verdampftes Speisewasser in die Verdampfer-Überhitzerheizflächen zu rezirkulieren.

Am Dampfaustritt der beiden Überhitzerheizflächen 28 und 36 befinden sich je ein Meßfühler 40 bzw. 41 zum Messen der Dampftemperatur. Diese Meßfühler 40, 41 sind über eine Signalverarbeitungs- und Regelstufe 64 an das Regelventil 30 im zweiten Strang 32 angeschlossen.

Im Betrieb treibt die Gasturbine 4 den Generator 8 und den auf derselben Welle sitzenden Luftverdichter 7 an, welcher die Brennkammer 10 der Gasturbine 4 mit Frischluft versorgt. Die heißen Abgase der Gasturbine 4 durchströmen im Ausführungsbeispiel den Abhitzedampferzeuger 5 von unten nach oben, wobei sie ihre Wärme der Reihe nach an den diversen im Abhitzedampferzeuger 5 eingebauten Heizflächen 28 und 36 sowie 25, 24, 23, 33, 32, 17, 56, 54 und 12 in dieser Reihenfolge abgeben. Sie werden danach im Ausführungsbeispiel am oberen Ende des Abhitzedampferzeugers 5 abgekühlt in den Kamin 11 entlassen. Im Abhitzedampferzeuger ist Wärme in verschiedenen Temperaturniveaus verfügbar. Am kühlen unteren Ende wird die Wärme dazu verwendet, das über die Kondensatpumpe 13 geförderte Kondensat vor Einleitung in den Speisewasserbehälter 16 aufzuwärmen bzw. mittels der Speisewasserumwälzpumpe 50 den Inhalt des Speisewasserbehälters 16 weiter aufzuwärmen. Zur Bereitstellung des für den Betrieb der Niederdruckdampfturbine 48 benötigten Niederdruckdampfes wird das Speisewasser mittels der Niederdruckspeisewasserpumpe 52 in das Niederdruck-Wasser-Dampf-Trenngefäß 53 befördert und von dort über die Umwälzpumpe 55 in die Niederdruck-Verdampferheizflächen 54 befördert. Der sich im Niederdruck-Wasser-Dampf-Trenngefäß 53 bildende Dampf gelangt über die Niederdruck-Überhitzerheizflächen 56 und die Niederdruckdampfleitung 57 in den Niederdruckteil 48 der Dampfturbine 47 und von dort aus wieder in den Kondensator 14.

Zur Bereitstellung des für den Betrieb des Mitteldruckteils 15 und Hochdruckteils 29 der Dampfturbine 47 benötigten Dampfes wird das Speisewasser mittels der Speisewasserpumpe 19 aus dem Speisewasserbehälter 16 in erste Hochdruck-Economizerheizflächen 17 befördert, dort weiter aufgeheizt und über die Verzweigungsstelle 20 sowohl in den ersten sogenannten Hochdruckstrang 21 als auch in den zweiten sogenannten Mitteldruckstrang 22 befördert.

Das durch den Hochdruckstrang 21 gepumpte Speisewasser wird zunächst im Hochdruck-Economizer 23 aufgeheizt und in den beiden in Serie geschalteten Hochdruck-Verdampferheizflächen 24, 25 verdampft, wobei jeweils noch nicht verdampftes Speisewasser über das Hochdruck-Wasser-Dampf-Trenngefäß 26 und die Umwälzpumpe 38 wieder in die Hochdruck-Verdampferheizflächen 24, 25 zurückgepumpt wird. Der am oberen Ende des Wasser-Dampf-Trenngefäßes 26 abgezogene Dampf gelangt über die Hochdruck-Dampfleitung 27 in die Hochdruck-Überhitzerheizflächen 28 des Abhitzedampferzeugers 5. Dort wird er auf die für den Hochdruckteil 29 der Dampfturbine 47 vorgesehene Temperatur überhitzt. Der überhitzte Hochdruckdampf H, dessen Temperatur durch den Sensor 40 gemessen wird, strömt über die Leitung 47 in den Hochdruckteil 29 der Dampfturbine 47 ein. Der am Ausgang aus dem Hochdruckteil 29 der Dampfturbine ausströmende teilentspannte sogenannte Abdampf A wird zusammen mit dem Dampf D, der in den Mitteldruck-Verdampferheizflächen 32, 33 erzeugt wurde, über die Abdampfleitung 35 in die Zwischenüberhitzerheizflächen 36 geleitet. Dort wird dieser Dampf auf annähernd die gleiche hohe Temperatur wie der Hochdruckdampf H aufgeheizt und als Mitteldruckdampf oder zwischenüberhitzter Dampf ZÜD über die Dampfzuführungsleitung 37 dem Mitteldruckteil 15 der Dampfturbine 47 zugeführt. Die Temperatur des Mitteldruckdampfes wird mit dem Sensor 41 gemessen. Der Abdampf des Mitteldruckteils 15 der Dampfturbine 47 wird in die von den Niederdruck-Überhitzerheizflächen kommende und zum Niederdruckteil 48 der Dampfturbine führende Niederdruck-Dampfleitung 57 eingespeist. Er kann im Niederdruckteil 48 der Dampfturbine noch weiter abgearbeitet werden.

Der von der Verzweigungsstelle 20 abgehende zweite Strang 22 führt erwärmtes Speisewasser über das Regelventil 30 und die Drosselstelle 31 - in der der Druck auf den Eingangsdruck des Mitteldruckteils 15 der Dampfturbine abgebaut wird - in die zwei Mitteldruckverdampfer-Heizflächen 32, 33. Der dort erzeugte Mitteldruckdampf wird an der Verbindungsstelle 70 in die Abdampfleitung 35 eingespeist. Er vermehrt somit die in den Zwischenüberhitzerheizflächen 36 aufzuheizende Dampfmenge. Das hat zur Folge, daß über die Meßfühler 40, 41, die am Ausgang der Hochdruck-Überhitzerheizflächen 28 bzw. der Zwischenüberhitzerheizflächen 36 angeordnet sind und die Dampfzustände in den beiden Dampfzuleitungen 47 bzw. 37 messen, das Regelventil 30 so gesteuert werden kann, daß sich die Dampftemperatur am Ausgang der beiden Überhitzerheizflächen 28, 36 einander annähern. Denn beim weiteren Öffnen des Regelventils 30 strömt etwas weniger Speisewasser in das Hochdruck-Heizflächensystem 23, 24, 25, 28. Das heißt, es wird also etwas weniger Hochdruckdampf H erzeugt, dieser aber dafür in den Hochdruck-Überhitzerheizflächen stärker aufgeheizt und es wird zugleich mehr Mitteldruckdampf erzeugt. Letzteres führt zu einer Absenkung der Temperatur am Ausgang der Überhitzer-Verfampferheizflächen 32, 33 und zu einem kühleren, Dampf D in der Dampfleitung 58. Das hat zur Folge, daß auch die Temperatur des ZÜD-Dampfes hinter den Zwischenüberhitzerheizflächen 36 absinkt und umgekehrt. Dies alles geschieht ohne die Verwendung von Einspritzkühlern, die hier nicht benötigt werden und nur den Gesamtwirkungsgrad herabsetzen würden.

Insgesamt führt das zu dem Ergebnis, daß der Abhitzedampferzeuger 5 so geregelt werden kann, daß die Temperaturen sowohl des Hochdruckdampfes H als auch des Zwischenüberhitzer-Dampfes ZÜD in den Dampfleitungen 47 und 37 auf annähernd das gleiche von der Dampfturbine noch tolerierte Temperaturniveau angehoben werden können. Dabei steigt der thermodynamische Wirkungsgrad insbesondere im Mitteldruckteil 15 der Dampfturbine, wenngleich, insgesamt gesehen, etwas weniger Dampf erzeugt wird. Darüber hinaus wird als weiterer Vorteil erreicht, daß durch bloßes Verändern der Speisewassermengen, die in den beiden Strängen 21, 22 eingespeist werden, Heizleistungsschwankungen etwa infolge Veränderungen des Brennstoffs in der Brennkammer 10 ohne Einsatz von Einspritzkühlern im Sinne einer Optimierung des Gesamtwirkungsgrades ausgeregelt werden können. Bei Einbau des in der Figur 1 nur gestrichelt angedeuteten Mitteldruck-Wasser-Dampf-Trenngefäßes 34 nebst Umwälzpumpe 39 wird zuverlässig vermieden, daß nasser Dampf in die Dampfleitung 58 gelangen kann, dafür wird aber die Regelfähigkeit des Gesamtsystems eingeschränkt.

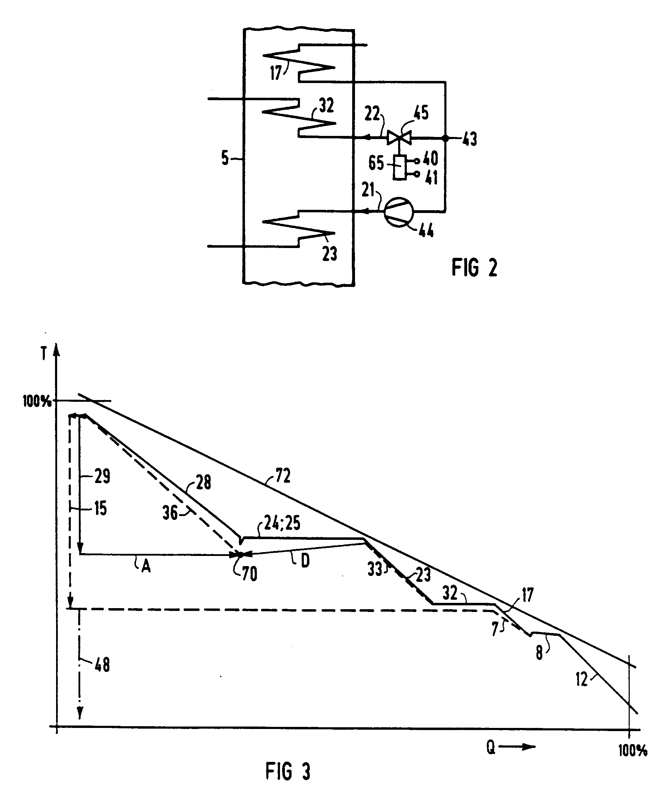

Die Figur 2 zeigt eine Variante des Ausführungsbeispiels der Figur 1. Hier ist die in der Figur 1 mit dem Bezugszeichen 20 versehene Verzweigungsstelle für die beiden Stränge 21, 22 mit 43 bezeichnet. Im ersten Strang 21 liegt hier eine Druckerhöhungspumpe 44 und im zweiten Strang 22 ein steuerbares Regelventil 45, das von einer Regelstufe 65 in Abhängigkeit der von den an den Meßfühlern 40, 41 gemessenen Temperatur gesteuert wird. Hierbei braucht bei sonst gleichem Aufbau des Gas- und Dampfturbinenkraftwerks 2 einschließlich des Abhitzedampferzeugers 5 die Speisewasserpumpe 19 nur den Druck aufzubauen, der dem Dampfdruck am Eingang des Mitteldruckteils 15 der Dampfturbine 47 entspricht. Da dieser Druck an der Verzweigungsstelle 43 vorliegt, muß in den zu den Hochdruck-Verdampferheizflächen 24, 25 führenden ersten Strang 21 der Speisewasserleitung eine zusätzliche Druckerhöhungspumpe 44 eingesetzt werden. Dafür kann die Drosselstelle 31 an dem zu den Zwischenüberhitzer-Verdampferheizflächen 32, 33 führenden zweiten Strang 22 entfallen, so daß in diesem zweiten Strang 22 nur noch das Regelventil 45 benötigt wird. Wird die Drehzahl der Druckerhöhungspumpe 44 geregelt, so könnte sogar das Regelventil 45 entfallen. Im übrigen sind die Vorteile der Regelung und die Vorteile des höheren Wirkungsgrades die gleichen wie im Ausführungsbeispiel der Figur 1.

Die Figur 3 zeigt in einem Q/T-Diagramm die Übertragung der Wärmeleistung des Rauchgases auf das in den verschiedenen Heizflächen des Abhitzedampferzeugers 5 strömende Speisewasser bzw. den daraus erzeugten Dampf in Abhängigkeit von der Temperatur. Im linken Abschnitt des Diagramms, im Bereich hoher Rauchgastemperaturen 72, befindet sich das Hochdrucksystem in dem Hochdruckdampf von 110 bis 150 bar in den Hochdruck-Verdampferheizflächen 24, 25 erzeugt und in den Hochdruck-Überhitzerheizflächen 28 überhitzt wird. Außerdem befinden sich im linken Abschnitt des Diagramms die Zwischenüberhitzerheizflächen 36, in welchen der Abdampf A, der den Hochdruckteil 29 der Dampfturbine 47 bei etwa 20 bis 40 bar verlassen hat, sowie weiterer in der Verbindungsstelle 70 zugemischter Mitteldruckampf D auf relativ hohe Temperaturen überhitzt wird.

Im mittleren Abschnitt des Diagramms der Figur 3 sind bei bereits tieferen Rauchgastemperaturen die Verhältnisse für die Hochdruck-Economizerheizflächen 17 und 23, in denen das Speisewasser vorgewärmt wird und für die Zwischenüberhitzer-Verdampferheizflächen 32, 33 dargestellt. Der in den Zwischenüberhitzer-Verdampferheizflächen gewonnene etwas überhitzte Dampf wird dem Abdampf A des Hochdruckteils der Dampfturbine bei 70 zugemischt und zusammen mit diesen in den Zwischenüberhitzerheizflächen 36 weiter überhitzt, um dann in den Mitteldruckteil 15 der Dampfturbine 47 eingespeist zu werden.

Im rechten und letzten Abschnitt des Diagramms der Figur 3 wird bei bereits stark abgekühlten Rauchgastemperaturen in den Niederdruck-Verdampferheizflächen 54 aus dem vorgewärmten Speisewasser Niederdruckdampf von etwa 3 bis 7 bar erzeugt und in den Niederdruck-Überhitzerheizflächen 56 überhitzt. Auch wird hier das Speisewasser und Kondensat in Kondensatvorwärmheizflächen 12 vorgewärmt. Der in den Niederdruck-Überhitzerheizflächen 56 überhitzte Niederdruckdampf N strömt gemeinsam mit dem Abdampf aus dem Mitteldruckteil 15 der Dampfturbine 47 in den Niederdruckteil 48 der Dampfturbine und expandiert dort bis auf den im Kondensator herrschenden Druck. Man erkennt in dem Diagramm, daß die mittlere Temperatur der Wärmeübertragung auf das Speisewasser bzw. den Dampf im gesamten Verlauf der Rauchgastemperatur im Abhitzedampferzeuger 5 jeweils sehr stark an die jeweilige Rauchgastemperatur angenähert ist, was zu einem optimalen Wirkungsgrad beim Wärmeübertrag und damit auch bei der Abwärmenutzung führt.

## Patentansprüche

1. Verfahren zum Betrieb einer Dampfturbine (15, 29, 47, 48), die mindestens ein Mitteldruckteil (15) und ein Hochdruckteil (29) aufweist, mit Hilfe eines von heißem Gas durchströmten Abhitzedampferzeugers (5), **dadurch gekennzeichnet,** daß
a) in einem Hochdruck-Heizflächensystem (23, 24, 25, 28) erzeugter überhitzter Dampf (H) dem Hochdruckteil (29) der Dampfturbine (47) zugeführt wird,
b) dem Abdampf (A) des Hochdruckteils (29) der Dampfturbine (47) eine kleinere einstellbare Menge Dampf (D) beigemischt wird, wobei diese kleinere Menge Dampf (D) im Abhitzedampferzeuger (5) in Mitteldruck-Verdampferheizflächen (32, 33) aus diesem zugeführten vorgewärmten Speisewasser (S) erzeugt wird,
c) die Mischung aus der kleineren Menge Dampf (D) und dem Abdampf (A) in Zwischenüberhitzer-Heizflächen (36) des Abhitzedampferzeugers (5) überhitzt wird,
d) die so überhitzte Dampfmischung dem Mitteldruckteil (15) der Dampfturbine zugeführt wird, und
e) durch Verstellen der kleineren Menge Dampf (D) die Temperatur des Dampfes (ZÜD) am Ausgang der Zwischenüberhitzer-Heizflächen (36) an die Temperatur des Dampfes (H) am Ausgang der Hochdruck-Überhitzer-Heizflächen (28) angenähert wird.

2. Verfahren nach Anspruch 1,
**dadurch gekennzeichnet,** daß das den Mitteldruck-Verdampferheizflächen (32, 33) zugeführte vorgewärmte Speisewasser von dem dem Hochdruck-Heizflächensystem (23, 24, 25, 28) zuströmenden vorgewärmten Speisewasser (S) abgezweigt wird.

3. Verfahren nach Anspruch 1 oder 2, **dadurch gezeichnet,** daß die Aufteilung des Speisewassers (S) zwischen dem Hochdruck-Heizflächen-System (23, 24, 25, 28) und den Mitteldruck-Verdampferheizflächen (32, 33) in Abhängigkeit von der Temperatur des Dampfes (ZÜD) am Ausgang der Zwischenüberhitzer-Heizflächen (36) erfolgt.

4. Verfahren nach einem der Ansprüche 1 oder 2,
**dadurch gekennzeichnet,** daß die Aufteilung des Speisewassers zwischen den Hochdruck-Heizflächen-Systemen (23, 24, 25, 28) und den Mitteldruck-Verdampferheizflächen (32, 33) in Abhängigkeit von der Differenz der Temperaturen des Dampfes am Ausgang der Hochdrucküberhitzer-Heizflächen (28) und der Zwischenüberhitzer-Heizflächen (36) erfolgt.

5. Anlage zur Durchführung des Verfahrens nach Anspruch 1 mit einer Dampfturbine (15, 29, 47, 48), mit mindestens einen Mitteldruckteil (15) und einem Hochdruckteil (29), mit einem von heißem Gas durchströmten Abhitzedampferzeuger (5), mit an dem Hochdruckteil der Dampfturbine angeschlossenen Hochdruck- Heizflächensystem (23, 24, 25, 28) und mit an die Abdampfleitung (35) des Hochdruckteils (29) der Dampfturbine angeschlossenen Zwischenüberhitzer-Heizflächen (36), welche ausgangsseitig an den Mitteldruckteil (15) der Dampfturbine angeschlossen sind, **dadurch gekennzeichnet,** daß die Speisewasserleitung des Abhitzedampferzeugers (5) zu einer Verzweigungsstelle (20, 43) führt, von der ein erster Strang in das Hochdruck-Heizflächensystem (23, 24, 25, 28) und ein zweiter Strang (22) in Mitteldruck-Verdampfer-Heizflächen (32, 33) führt, wobei der Ausgang der Mitteldruck-Verdampfer-Heizflächen (32, 33) in den Eingang der Zwischenüberhitzer-Heizflächen (36) mündet, und wobei mindestens einem der beiden Stränge zur Annäherung der Temperatur des Dampfes (ZÜD) am Ausgang der Zwischenüberhitzer-Heizflächen (36) an die Temperatur des Dampfes (H) am Ausgang der Hochdrucküberhitzer-Heizflächen (28) von einer Regelstufe (64, 65) verstellbare Mittel (30, 44, 45) zur Veränderung des Aufteilungsverhältnisses zugeordnet sind, wobei die Regelstufe (64, 65) ihrerseits über Meßfühler (40, 41) die Temperatur des Dampfes (H) und des Dampfes (ZÜD) erfaßt.

6. Anlage nach Anspruch 5, **gekennzeichnet** durch einen Abhitzedampferzeuger (5)
a) mit einem Hochdruck-Heizflächensystem (23, 24, 25, 28) zur Erzeugung eines überhitzten Dampfes (H), der dem Hochdruckteil (29) einer Dampfturbine (47) zuführbar ist,
b) mit Mitteldruck-Verdampferheizflächen (32, 33), denen vorgewärmtes Speisewasser (S) zur Verdampfung und gegebenenfalls Überhitzung zuführbar ist und die mit ihrem Ausgang an die Abdampfleitung (35) des Hochdruckteils (29) der Dampfturbine anschließbar sind,
c) mit Zwischenüberhitzer-Heizflächen (36),
c1) die mit ihrem Eingang an den Ausgang der Zwischenüberhitzer-Verdampfer-Heizflächen (32, 33) und an der Abdampfleitung (35) des Hochdruckteils der Dampfturbine anschließbar sind,
c2) die zur Überhitzung des Gemisches aus dem Abdampf (A) des Hochdruckteils (29) der Dampfturbine und aus dem Dampf (D) der Mitteldruck-Verdampferheizflächen (32, 33) vorgesehen sind und
c3) deren Ausgang über eine Leitung (37) an den Mitteldruckteil (15) der Dampfturbine anschließbar ist.

7. Anlage nach Anspruch 5 oder 6, **dadurch gekennzeichnet,** daß ein Drosselventil (31) in den zu den Mitteldruckverdampfer-Heizflächen (32, 33) führenden zweiten Strang (22) eingebaut ist.

8. Anlage nach einem der Ansprüche 5 bis 7, **dadurch gekennzeichnet,** daß zur veränderlichen Aufteilung des Speisewassers auf die beiden Speisewasserstränge (21, 22) eine im ersten Strang (21) eingebaute weitere drehzahlgesteuerte Druckerhöhungspumpe (44) vorgesehen ist.

9. Anlage nach einem der Ansprüche 5 bis 8, **dadurch gekennzeichnet,** daß zur veränderlichen Aufteilung des Speisewassers auf die beiden Stränge (21, 22) ein im zweiten Strang (22) eingebautes Regelventil (30, 45) vorgesehen ist.

10. Anlage nach einem der Ansprüche 5 bis 9, **dadurch gekennzeichnet,** daß die Hochdrucküberhitzer-Heizflächen (28) und die Zwischenüberhitzer-Heizflächen (36) im Abhitzedampferzeuger (5) im Bereich der gleichen größten Gastemperatur angeordnet sind.

11. Anlage nach einem der Ansprüche 5 bis 10,
**dadurch gekennzeichnet,** daß Temperaturmeßfühler (40, 41) am Ausgang der Überhitzerheizflächen (28, 36) zur Steuerung der Mittel (30, 44, 45) zur Beeinflussung des Aufteilungsverhältnisses des Speisewassers auf die beiden Stränge (21, 22) vorgesehen sind.

12. Anlage nach einem der Ansprüche 5 bis 11,
**dadurch gekennzeichnet,** daß zweite Hochdruck-Economizerheizflächen (23) in dem zu dem Hochdruckverdampfer-Heizflächen (24, 25) führenden ersten Strang (21) eingebaut sind.

13. Anlage nach einem der Ansprüche 5 bis 12,
**dadurch gekennzeichnet,** daß die Mitteldruck-Verdampferheizflächen (32, 33) ausgangsseitig an die zu den Zwischenüberhitzer-Heizflächen (36) führende Abdampfleitung (35) des Hochdruckteils (29) der Dampfturbine angeschlossen sind.

14. Anlage nach einem der Ansprüche 5 bis 13,
**dadurch gekennzeichnet,** daß die Verzweigungsstelle (20, 43) in Strömungsrichtung des Speisewassers gesehen hinter ersten Hochdruck-Economizerheizflächen (17) eingebaut ist.

15. Anlage nach einem der Ansprüche 5 bis 14,
**dadurch gekennzeichnet,** daß die Verzweigungsstelle (20, 43) in Strömungsrichtung des Speisewassers gesehen vor den zweiten Hochdruck-Economizerheizflächen (23) eingebaut ist.

16. Anlage nach einem der Ansprüche 5 bis 15,
**dadurch gekennzeichnet,** daß dem Dampfkraftwerksteil ein Gasturbinenkraftwerk (1) zugeordnet ist, dessen Abgasleitung (3) an den Abhitzedampferzeuger (5) angeschlossen ist.

## Claims

1. A method for operating a steam turbine (15, 29, 47, 48), which has at least one medium-pressure part (15) and a high-pressure part (29), with the aid of a waste heat steam generator (5) with hot gas flowing through it, characterised in that
a) superheated steam (H) generated in a high-pressure heating surface system (23, 24, 25, 28) is supplied to the high-pressure part (29) of the steam turbine (47),
b) a smaller adjustable quantity of steam (D) is added to the exhaust steam (A) of the high-pressure part (29) of the steam turbine (47), this smaller quantity of steam (D) being generated in the waste heat steam generator (5) in medium-pressure evaporator heating surfaces (32,33) from preheated feed water (S) supplied to it,
c) the mixture of the smaller quantity of steam (D) and the exhaust steam (A) is superheated in the intermediate superheater heating surfaces (36) of the waste heat steam generator (5),
d) the steam mixture superheated thus is supplied to the medium-pressure part (15) of the steam turbine and
e) by adjusting the smaller quantity of steam (D), the temperature of the steam (ZÜD) at the outlet of the intermediate superheater heating surfaces (36) is approximated to the temperature of the steam (H) at the outlet of the high-pressure superheater heating surfaces (28).

2. A method according to claim 1,
characterised in that the preheated feed water supplied to the medium-pressure evaporator heating surfaces (32,33) branches off from the preheated feed water (S) flowing to the high-pressure heating surface system (23, 24, 25,28).

3. A method according to claim 1 or 2,
characterised in that the division of the feed water (S) between the high-pressure heating surface system (23,24,25,28) and the medium-pressure evaporator heating surfaces (32,33) occurs in dependence on the temperature of the steam (ZÜD) at the outlet of the intermediate superheater heating surfaces (36).

4. A method according to one of claims 1 or 2, characterised in that the division of the feed water between the high-pressure heating surface systems (23,24,25,28) and the medium-pressure evaporator heating surfaces (32,33) occurs in dependence on the difference of the temperatures of the steam at the outlet of the high-pressure superheater heating surfaces (28) and the intermediate superheater heating surfaces (36).

5. A unit for carrying out the method according to claim 1 having a steam turbine (15, 29, 47, 48) with at least one medium-pressure part (15) and one high-pressure part (29), with a waste heat steam generator (5) with hot gas flowing through, with a high-pressure heating surface system (23,24,25,28) connected to the high-pressure part of the steam turbine, and with intermediate superheater heating surfaces (36) connected to the exhaust steam line (35) of the high-pressure part (29) of the steam turbine, which are connected on the outlet side to the medium-pressure part (15) of the steam turbine, characterised in that the feed water line of the waste heat steam generator (5) leads to a branching point (20,43), from which a first branch leads into the high-pressure heating surface system (23,24,25,28) and a second branch (22) into the medium-pressure evaporator heating surfaces (32,33), wherein the outlet of the medium-pressure evaporator heating surfaces (32,33) opens into the inlet of the intermediate superheater heating surfaces (36) and wherein allocated to at least one of the two branches for approximating the temperature of the steam (ZÜD) at the outlet of the intermediate superheater heating surfaces (36) to the temperature of the steam (H) at the outlet of the high-pressure superheater heating surfaces (28), there are means (30,44,45) able to be adjusted by a regulating stage (64,65) for altering the distribution ratios, wherein the regulating stage (64,65) for its part detects by way of sensors (40,41) the temperature of the steam (H) and the steam (ZÜD).

6. A unit according to claim 5,
characterised by a waste heat steam generator (5),
a) with a high-pressure heating surface system (23,24,25,28) for generating a superheated steam (H) which is able to be supplied to the high-pressure part (29) of a steam turbine (47),
b) with medium-pressure evaporator heating surfaces (32,33) to which preheated feed water (S) is able to be supplied for evaporating and possibly superheating and which are able to be connected with their outlet to the exhaust steam line (35) of the high-pressure part (29) of the steam turbine,
c) with intermediate superheater heating surfaces (36),
c1) which are able to be connected with their inlet to the outlet of the intermediate superheater-evaporator-heating surfaces (32,33) and to the exhaust steam line (35) of the high-pressure part of the steam turbine,
c2) which are provided for superheating the mixture of the steam (A) of the high-pressure part (29) of the steam turbine and of the steam (D) of the medium-pressure evaporator heating surfaces (32,33) and
c3) the outlet of which is able to be connected by way of a line (37) to the medium-pressure part (15) of the steam turbine.

7. A unit according to claim 5 or 6,
characterised in that a throttle valve (31) is fitted in the second branch (2) leading to the medium-pressure evaporator heating surfaces (32,33).

8. A unit according to one of claims 5 to 7,
characterised in that the for variable distribution of the feed water to the two feed water branches (21,22) there is provided a further speed-controlled pressure elevating pump (44) fitted in a first branch (21).

9. A unit according to one of claims 5 to 8,
characterised in that for variable distribution of the feed water to the two branches (21,22) there is provided a regulating valve (30,45) fitted in the second branch (22).

10. A unit according to one of claims 5 to 9, characterised in that the high-pressure superheater heating surfaces (28) and the intermediate superheater heating surfaces (36) are arranged in the waste heat steam generator (5) in the region of the same highest gas temperature.

11. A unit according to one of the claims 5 to 10, characterised in that temperature sensors (40,41) are provided at the outlet of the superheater heating surfaces (28, 36) for controlling the means (30,44, 45) for influencing the distribution ratio of the feed water to the two branches (21,22).

12. A unit according to one of claims 5 to 11, characterised in that second high-pressure economizer heating surfaces (23) are fitted in the first branch (21) leading to the high-pressure evaporator heating surfaces (24,25).

13. A unit according to one of claims 5 to 12, characterised in that the medium-pressure evaporator heating surfaces (32,33) are connected on the outlet side to the exhaust steam line (35) of the high-pressure part (29) of the steam turbine leading to the intermediate superheater heating surfaces (36).

14. A unit according to one of claims 5 to 13, characterised in that the branching point (20,43), seen in the flow direction of the feed water, is fitted behind first high-pressure economizer heating surfaces (17).

15. A unit according to one of claims 5 to 14, characterised in that the branching point (20,43), seen in the flow direction of the feed water, is fitted in front of second high-pressure economizer heating surfaces (23).

16. A unit according to one of claims 5 to 15, characterised in that a gas turbine power plant (1) is associated with the steam power plant part, the exhaust gas line (3) of which is connected to the waste heat steam generator (5).

## Revendications

1. Procédé de fonctionnement d'une turbine à vapeur (15, 29,47, 48), qui présente au moins un étage moyenne pression (15) et un étage haute pression (29), à l'aide d'un générateur (5) de vapeur fonctionnant par récupération de chaleur perdue, parcouru par un gaz chaud, caractérisé en ce qu'il consiste
a) à envoyer de la vapeur (H) surchauffée produite dans un système (23, 24, 25, 28) à surfaces de chauffe haute pression (23, 24, 25, 28) à l'étage haute pression (29) de la turbine à vapeur (47),
b) à mélanger une plus petite quantité, susceptible d'être réglée, de vapeur (D) à la vapeur d'échappement (A) de l'étage haute pression (29) de la turbine à vapeur (47), cette quantité de vapeur (D) plus petite étant produite dans le générateur (5) de vapeur fonctionnant par récupération de chaleur perdue sur des surfaces de chauffe (32, 33) de vaporisation moyenne pression, à partir d'eau d'alimentation (S) préchauffée qui lui est envoyée,
c) à surchauffer le mélange de quantité de vapeur (D) plus petite et de la vapeur d'échappement (A) sur les surfaces de chauffe (36) du surchauffeur intermédiaire du générateur de vapeur fonctionnant par récupération de chaleur perdue,
d) à envoyer le mélange de vapeur ainsi surchauffé à l'étage moyenne pression (15) de la turbine à vapeur, et
e) en réglant la plus petite quantité de vapeur (D), à rapprocher la température de la vapeur (ZUD) à la sortie des surfaces de chauffe (36) du surchauffeur intermédiaire de la température de la vapeur (H) à la sortie des surfaces de chauffe du surchauffeur haute pression.

2. Procédé selon la revendication 1, caractérisé en ce qu'il consiste à dériver l'eau d'alimentation préchauffée amenée aux surfaces de chauffe (32, 33) de vaporisation moyenne pression de l'eau d'alimentation (S) préchauffée arrivant au système (23, 24, 25, 28) de surfaces de chauffe haute pression.

3. Procédé selon la revendication 1 ou 2, caractérisé en ce qu'il constite à effectuer la répartition de l'eau d'alimentation (S) entre le système (23, 24, 25, 28) de surfaces de chauffe haute pression et les surfaces de chauffe (32, 33) de vaporisation moyenne pression en fonction de la température de la vapeur (ZUD) à la sortie des surfaces de chauffe (36) du surchauffeur intermédiaire.

4. Procédé selon l'une des revendications 1 ou 2, caractérisé en ce qu'il consiste à effectuer la répartition de l'eau d'alimentation entre les systèmes (23, 24, 25, 28) de surfaces de chauffe haute pression et les surfaces de chauffe (32, 33) de vaporisation moyenne pression en fonction de la différence des températures de la vapeur à la sortie des surfaces de chauffe (28) du surchauffeur haute pression et des surfaces de chauffe (36) du surchauffeur intermédiaire.

5. Installation pour la mise en oeuvre du procédé selon la revendication 1, comportant une turbine à vapeur (15, 29, 47, 48) ayant au moins un étage moyenne pression (15) et un étage haute pression (29), un générateur de vapeur (5) fonctionnant par récupération de chaleur perdue et parcouru par un gaz chaud, un système (23, 24, 25, 28) de surfaces de chauffe haute pression raccordé à l'étage haute pression de la turbine à vapeur et des surfaces de chauffe du surchauffeur intermédiaire raccordé à la conduite (35) de vapeur d'échappement de l'étage haute pression (29) de la turbine à vapeur, qui sont raccordées du côté de la sortie à l'étage moyenne pression (15) de la turbine à vapeur, caractérisé en ce que la conduite d'eau d'alimentation du générateur de vapeur (5) fonctionnant par récupération de chaleur perdue mène à une bifurcation (20, 43), à partir de laquelle une première branche va dans le système (23, 24, 25, 28) de surfaces de chauffe haute pression, et une deuxième branche (22) va sur les surfaces de chauffe (32, 33) du générateur de vapeur moyenne pression, la sortie des surfaces de chauffe (32, 33) du générateur de vapeur moyenne pression débouchant dans l'entrée des surfaces de chauffe (36) du surchauffeur intermédiaire et des moyens réglables à l'aide d'un étage de régulation (64, 65) étant affectés, en vue de la modification du rapport de répartition, à au moins l'une des deux branches en vue de rapprocher la température de la vapeur (ZUD) à la sortie des surfaces de chauffe (36) du surchauffeur intermédiaire de la température de la vapeur (H) à la sortie des surfaces de chauffe (28) du surchauffeur haute pression, l'étage de régulation (64, 65) détectant de son côté la température de la vapeur (H) et de la vapeur (ZUD) par l'intermédiaire de capteurs de mesure (40, 41).

6. Installation selon la revendication 5, caractérisé par un générateur de vapeur (5) fonctionnant par récupération de la chaleur perdue, comportant
a) un système de surfaces de chauffe haute pression (23, 24, 25, 28), destiné à produire de la vapeur surchauffée (H) qui peut être envoyée à l'étage haute pression (29) d'une turbine à vapeur (47),
b) des surfaces de chauffe (32, 33) de vaporisation moyenne pression auxquelles peut être amenée de l'eau d'alimentation préchauffée (5) en vue de sa vaporisation et le cas échéant de sa surchauffe et qui peuvent être raccordées à leur sortie au conduit (35) de vapeur d'échappement de l'étage haute pression (29) de la turbine à vapeur,
c) des surfaces de chauffe (36) de surchauffeur intermédiaire
c1) qui peuvent être raccordées par leur entrée à la sortie des surfaces de chauffe (32, 33) de vaporisation du surchauffeur intermédiaire et au conduit (35) de vapeur d'échappement de l'étage haute pression de la turbine à vapeur,
c2) qui sont prévues pour la surchauffe du mélange constitué de la vapeur d'échappement (A) de l'étage haute pression (29) de la turbine à vapeur et de la vapeur (D) des surfaces de chauffe (32, 33) de vaporisation moyenne pression,
c3) et dont la sortie peut être raccordée à l'étage moyenne pression (15) de la turbine à vapeur, par l'intermédiaire d'un conduit (37).

7. Installation selon la revendication 5 ou 6, caractérisée en ce qu'une valve d'étranglement (31) est montée dans la deuxième branche (22) menant aux surfaces de chauffe (32, 33) de vaporisation moyenne pression.

8. Installation selon l'une des revendications 5 à 7, caractérisée en ce qu'en vue de pouvoir modifier la répartition de l'eau d'alimentation entre les deux branches (21, 22) d'eau d'alimentation, il est prévu en supplément un groupe surpresseur à vitesse de rotation commandée, monté dans la première branche (21).

9. installation selon l'une des revendications 5 à 8, caractérisée en ce qu'en vue de pouvoir modifier la répartition de l'eau d'alimentation entre les deux branches (21, 22) il est prévu une valve de régulation (30, 45) montée dans la deuxième branche (22).

10. Installation selon l'une des revendications 5 à 9, caractérisée en ce que les surfaces de chauffe (28) du surchauffeur haute pression et les surfaces de chauffe (36) du surchauffeur intermédiaire sont disposées dans le générateur de vapeur (5) fonctionnant par récupération de la chaleur perdue dans la zone de la température de gaz identique la plus élevée.

11. Installation selon l'une des revendications 5 à 10, caractérisée en ce que des capteurs de température (40, 41) sont prévus à la sortie des surfaces de chauffe (28, 36) du surchauffeur en vue de commander des moyens (30, 44, 45) destinés à agir sur le rapport de répartition de l'eau d'alimentation entre les deux branches (21, 22).

12. Installation selon l'une des revendications 5 à 11, caractérisée en ce que des deuxièmes surfaces de chauffe (23) d'économiseur haute pression sont montées dans la première branche menant aux surfaces de chauffe (24, 25) du générateur de vapeur haute pression.

13. Installation selon l'une des revendications 5 à 12, caractérisée en ce que les surfaces de chauffe (32, 33) moyenne pression sont raccordées du côté sortie au conduit (35) de vapeur d'échappement de l'étage haute pression (29) de la turbine à vapeur menant aux surfaces de chauffe (36) du surchauffeur intermédiaire.

14. Installation selon l'une des revendications 5 à 13, caractérisée en ce que la bifurcation (20, 43) est montée, en regardant dans le sens d'écoulement de l'eau d'alimentation, en aval des premières surfaces de chauffe (17) d'économiseur haute pression.

15. Installation selon l'une des revendications 5 à 14, caractérisée en ce que la bifurcation (20, 43) est montée, en regardant dans le sens d'écoulement de l'eau d'alimentation, en amont des deuxièmes surfaces de chauffe (23) d'économiseur haute pression.

16. Installation selon l'une des revendications 5 à 15, caractérisée en ce qu'un générateur (1) d'énergie à turbine à gaz est associé à la section de générateur d'énergie à vapeur, son conduit (3) de gaz d'échappement étant raccordé au générateur de vapeur fonctionnant par récupération de la chaleur perdue.
